# EUROPEAN PATENT APPLICATION

(11) **EP 4 152 779 A1**
(43) Date of publication of application: **22.03.2023**
(21) Application number: 21804455.0
(22) Date of filing: 13.05.2021
(51) Int. Cl.: H04W 4/06

(54) **TRANSMISSION MODE DETERMINATION METHOD AND APPARATUS, AND DEVICE, AND STORAGE MEDIUM**

(30) Priority: 15.05.2020 CN 202010415036
(71) Applicant: Datang Mobile Communications Equipment Co., Ltd., Beijing 100085 (CN)
(72) Inventor: DUAN, Xiaoyan, Beijing 100085 (CN)
(74) Representative: Studio Torta S.p.A.
(86) International application number: PCT/CN2021/093565
(87) International publication number: WO 2021/228191

(57) **Abstract**

Embodiments of the present application provide a transmission mode determination method and apparatus, and a device, and a storage medium. The method is used for an AN function, and comprises: receiving multicast broadcast service (MBS) assistance information sent by a CN function or an OAM platform; and determining a radio delivery mode and/or radio resources of an MBS service according to the MBS assistance information. Therefore, according to the embodiments of the present application, the unified control of the network to an AN transmission mode is improved, the overall performance of the network is optimized, and the transmission mode determination accuracy is improved.

## Description

### CROSS-REFERENCE TO RELATED APPLICATION

The present application claims priority to Chinese application No. 2020104150361 filed on May 15, 2020, entitled "Transmission Mode Determination Method and Apparatus, and Device, and Storage Medium", which is hereby incorporated by reference in its entirety.

### FIELD

The present application relates to the technical field of communication, and in particular, to methods and apparatuses for determining a delivery mode, and an equipment, and a storage medium.

### BACKGROUND

Data delivery modes used in an Internet Protocol (IP) network include unicast, multicast and broadcast. Unicast refers to "one-to-one" communication, that is, data is sent from one equipment to one receiver; while multicast/broadcast refer to "one-to-multi" communication, that is, the same data are sent from one sender to multiple receivers through techniques such as shared channels and content replication. Compared with unicast, multicast/broadcast has higher utilization efficiency of network resources. The difference between multicast and broadcast is that the receiver for multicast receives specific multicast service content (that is, data) by subscribing to and/or joining a group, and terminates the receiving of the service content by canceling the subscription and/or leaving the group, while any device within a broadcast area or network can receive broadcast content without subscribing to or joining a group.

Currently, the 5th generation (5G) mobile communication system can support unicast transmission. Moreover, the 5G mobile communication system will support multicast/broadcast data delivery to support more services. Therefore, that how to better manage these different data delivery modes is an urgent problem to be solved at present in the 5G mobile communication system.

### SUMMARY

In view of the problems above, embodiments of the present application provide a method and an apparatus for determining a delivery mode, and an equipment, and a storage medium.

An embodiment of the present application provides a method for determining a delivery mode, performed by access network (AN) function, including:
receiving multicast broadcast service (MBS) assistance information sent by core network (CN) function or an operation, administration and maintenance (OAM) platform; and
determining a radio delivery mode for MBS service and/or radio resources for the MBS service according to the MBS assistance information.

In an embodiment, the MBS service includes a first MBS session or a quality of service (QoS) flow that is being established or modified, and/or a second MBS session or QoS flow with data transmission in progress.

In an embodiment, the MBS assistance information includes one or more of the following information:
the first number of user equipments (UEs), used for indicating that the AN function is suggested to deliver the MBS service or session in a multicast or broadcast mode when the number of UEs that are receiving or expect to receive the MBS service or session under the AN function or a cell of the AN function reaches the first number of LTEs;
the second number of UEs, where the second number of UEs is the number of UEs counted or predicted by the CN or OAM that are receiving or expect to receive MBS service or session under the AN function or a cell of the AN function;
information of a delivery mode for specified service or application or session or QoS flow;
UE subscription data related to MBS services;
UE capability information for delivery mode;
AN performance information;
suggested information of the delivery mode used by the AN under specified performance of AN;
CN performance information;
suggested information or suggested policy for the delivery mode used by the AN under specified performance of CN.

In an embodiment, the method further includes:
determining the third number of UEs according to local measurements of the AN function or the second number of UEs, where the third number of UEs is the number of UEs that receive the MBS service or session under the AN function or a cell of the AN function; and
determining that the radio delivery mode for the MBS service or session is multicast or broadcast radio delivery mode, and/or the radio resources for the MBS service or session are multicast or broadcast radio resources when the third number of UEs reaches the fourth number of UEs, where the fourth number of UEs is the first number of UEs or the minimum number of UEs that receives the MBS service or session in a multicast or broadcast mode determined by the AN function according to the local policy.

In an embodiment, the method further includes:
receiving a radio resource control (RRC) message sent by the UE, where the RRC message includes a first identifier used for indicating MBS service that the UE expects to receive;
determining, for the UE, radio delivery mode for MBS service and/or the radio resources for the MBS service when the UE subscription data related to the MBS services includes the MBS service that the UE expects to receive.

In an embodiment, the information of a delivery mode for the specified service or application or session or QoS flow includes that the specified service or application or session or QoS flow is allowed to be delivered in a multicast or broadcast mode only, or in a unicast mode only, or in both unicast and multicast or broadcast modes.

In an embodiment, the AN performance information is used for indicating a congestion status or communication performance of the AN; and/or the CN performance information is used for indicating a congestion status or communication performance of the CN; and
the determining a radio delivery mode for MBS service and/or radio resources for the MBS service according to the MBS assistance information, includes:
determining a radio delivery mode for MBS service and/or radio resources for the MBS service or session according to the congestion status or communication performance of the AN and/or the congestion status or communication performance of the CN.

An embodiment of the present application provides a method for determining a delivery mode, performed by core network (CN) function or an operation, administration and maintenance (OAM) platform, including:
determining multicast broadcast service (MBS) assistance information; and
sending the MBS assistance information to access network (AN) function for indicating the AN function to determine the radio delivery mode for MBS service and/or the radio resources for the MBS service according to the MBS assistance information.

In an embodiment, the determining MBS assistance information includes:
determining, by the CN function or the OAM platform, the MBS assistance information based on one or more of the following parameters:
analytics information of network data;
MBS policy;
UE subscription data related to MBS services; or
information sent by the UE to the CN function through non-access stratum (NAS) signaling.

In an embodiment, the determining MBS assistance information includes:
subscribing to or requesting analytics information of a network from the network data analytic function (NWDAF), and receiving the analytics information sent by the NWDAF; and
determining the MBS assistance information according to the analytics information.

In an embodiment, the subscribing to or requesting analytics information of a network from the NWDAF, and receiving the analytics information sent by the NWDAF, includes:
in case that the CN function is an application function (AF), subscribing to or requesting, by the AF, the analytics information from the NWDAF, and receiving the analytics information sent by the NWDAF; or subscribing to or requesting, by the AF, the analytics information from the NWDAF through a network exposure function (NEF) and receiving the analytics information sent by the NWDAF through the NEF; or
in case that the CN function is a policy control function (PCF), subscribing to or requesting, by the PCF, the analytics information from the NWDAF, and receiving the analytics information sent by the NWDAF; or
in case that the CN function is the SMF, subscribing to or requesting, by the SMF, the analytics information from the NWDAF, and receiving the analytics information sent by the NWDAF.

In an embodiment, the analytics information includes one or more of the following types:
service experience;
network performance;
user data congestion;
quality of service (QoS) sustainability; or
network function (NF) load.

In an embodiment, the determining the MBS assistance information according to the analytics information, includes:
in case that the CN function is an AF, updating, by the AF, MBS service parameters according to the analytics information, and sending the updated MBS service parameters to a policy control function (PCF); or
in case that the CN function is a PCF, updating, by the PCF, MBS policies according to the analytics information and/or the updated MBS service parameters, and sending the updated MBS policies to the SMF; or
in case that the CN equipment is a SMF, determining, by the SMF, the MBS assistance information based on one or more of the following parameters:
   the analytics information;
   the updated MBS policies;
   UE subscription data related to MBS services, which is obtained by the SMF from the unified data management (UDM); or
   information sent by the UE to the SMF through non-access stratum (NAS) signaling.

In an embodiment, the MBS assistance information includes one or more of the following information:
the first number of user equipments (UEs), used for indicating that the AN function is suggested to deliver the MBS service or session in a multicast or broadcast mode when the number of UEs that are receiving or expect to receive the MBS service or session under the AN function or a cell of the AN function reaches the first number of LTEs;
the second number of UEs, where the second number of UEs is the number of UEs counted or predicted by the CN or OAM that are receiving or expect to receive MBS service or session under the AN function or a cell of the AN function;
information of a delivery mode of specified service or application or session or quality of service (QoS) flow;
UE subscription data related to MBS services;
UE capability information for delivery mode;
AN performance information;
suggested information of the delivery mode used by AN under specified state or communication performance of the AN;
CN performance information, including CN performance statistics or predictions information;
suggested information or suggested policy for the delivery mode used by the AN under the specified performance of CN.

An embodiment of the present application provides an apparatus for determining a delivery mode, applied to an access network (AN) function, including:
a first receiving device, configured to receive multicast broadcast service (MBS) assistance information sent by core network (CN) function or an operation, administration and maintenance (OAM) platform; and
a first delivery mode determining device, configured to determine a radio delivery mode for MBS service and/or radio resources for the MBS service according to the MBS assistance information.

In an embodiment, the MBS service includes a first MBS session or a quality of service (QoS) flow that is being established or modified, and/or a second MBS session or QoS flow with data transmission in progress.

In an embodiment, the MBS assistance information includes one or more of the following information:
the first number of user equipments (UEs), used for indicating that the AN function is suggested to deliver the MBS service or session in a multicast or broadcast mode when the number of UEs that are receiving or expect to receive the MBS service or session under the AN function or a cell of the AN function reaches the first number of LTEs;
the second number of UEs, where the second number of UEs is the number of UEs counted or predicted by the CN or OAM that are receiving or expect to receive MBS service or session under the AN function or a cell of the AN function;
information of a delivery mode of specified service or application or session or quality of service (QoS) flow;
UE subscription data related to MBS services;
UE capability information for delivery mode;
AN performance information;
suggested information of the delivery mode used by AN under the specified state or communication performance of the AN;
CN performance information, including CN performance statistics or predictions information;
suggested information or suggested policy for the delivery mode used by the AN under the specified performance of CN.

In an embodiment, the apparatus further includes:
a UE number determining device, configured to determine the third number of UEs according to local measurements of the AN function or the second number of UEs, where the third number of UEs is the number of UEs that receive the MBS service or session under the AN function or a cell of the AN function; and
a second delivery mode determining device, configured to determine that the radio delivery mode for the MBS service or session is multicast or broadcast radio delivery mode, and/or the radio resources for the MBS service or session are multicast or broadcast radio resources when the third number of UEs reaches the fourth number of UEs, the fourth number of UEs being the first number of UEs or the minimum number of UEs that receives the MBS service or session in a multicast or broadcast mode determined by the AN function according to the local policy.

In an embodiment, the apparatus further includes:
a second receiving device, configured to receive a radio resource control (RRC) message sent by UE, where the RRC message includes a first identifier used for indicating MBS service that the UE expects to receive;
a third delivery mode determining device, configured to determine, for the UE, radio delivery mode for MBS service and/or radio resources for the MBS service when the UE subscription data related to MBS services includes the MBS service that the UE expects to receive.

In an embodiment, the information of a delivery mode for the specified service or application or session or QoS flow includes that the specified service or application or session or QoS flow is allowed to be delivered in a multicast or broadcast mode only, or in a unicast mode only, or in both unicast and multicast or broadcast modes.

In an embodiment, the AN performance information is used for indicating a congestion status or communication performance of the AN; and/or the CN performance information is used for indicating a congestion status or communication performance of the CN; and
the first delivery mode determining device is configured to determine a radio delivery mode for MBS service and/or radio resources for the MBS service or session according to the congestion status or communication performance of the AN and/or the congestion status or communication performance of the CN.

An embodiment of the present application provides an apparatus for determining a delivery mode, applied to a core network (CN) function or an operation, administration and maintenance (OAM) platform, including:
an assistance information determining device, configured to determine multicast broadcast service (MBS) assistance information; and
a first sending device, configured to send the MBS assistance information to an access network (AN) function for indicating the AN function to determine the radio delivery mode for MBS service and/or the radio resources for the MBS service according to the MBS assistance information.

In an embodiment,
the assistance information determining device is further configured to determine the MBS assistance information based on one or more of the following parameters:
analytics information of network data;
MBS policy;
UE subscription data related to MBS services; or
information sent by the UE to the CN function through non-access stratum (NAS) signaling.

In an embodiment, the apparatus further includes:
a second sending device, configured to subscribe to or request analytics information of a network from a network data analytic function (NWDAF); and
a receiving module, configured to receive the analytics information sent by the NWDAF,
where the assistance information determining device is further configured to determine the MBS assistance information according to the analytics information.

In an embodiment, the analytics information includes one or more of the following types:
service experience;
network performance;
user data congestion;
quality of service (QoS) sustainability;
network function (NF) load.

In an embodiment, in case that the CN function is AF, the apparatus further includes:
a first updating device, configured to update MBS service parameters according to the analytics information;
a third sending device, configured to send the updated MBS service parameters to a policy control function (PCF); or
in case that the CN function is the PCF, the apparatus further includes:
   a second updating device, configured to update MBS policies according to the analytics information and/or the updated MBS service parameters;
   a fourth sending device, configured to send the updated MBS policy to the SMF; or
in case that the CN function is the SMF, the apparatus further includes:
   the assistance information determining device is configured to determine the MBS assistance information based on one or more of the following parameters:
   the analytics information;
   the updated MBS policies;
   UE subscription data related to MBS services; or
   information sent by the UE to the CN function through non-access stratum (NAS) signaling.

In an embodiment, the MBS assistance information includes one or more of the following information:
the first number of user equipments (UEs), used for indicating that the AN function is suggested to deliver the MBS service or session in a multicast or broadcast mode when the number of UEs that are receiving or expect to receive the MBS service or session under the AN function or a cell of the AN function reaches the first number of LTEs;
the second number of UEs, where the second number of UEs is the number of UEs counted or predicted by the CN or OAM that are receiving or expect to receive MBS service or session under the AN function or a cell of the AN function;
information of a delivery mode of the specified service or application or session or quality of service (QoS) flow;
UE subscription data related to MBS services;
UE capability information for delivery mode;
AN performance information;
suggested information of the delivery mode used by AN under the specified state or communication performance of the AN;
CN performance information, including CN performance statistics or predictions information;
suggested information or suggested policy for the delivery mode used by the AN under the specified performance of CN.

An embodiment of the present application provides access network (AN) function, including a processor, and a memory storing a processor-executable program that, when executed by the processor, causes the processor to perform steps of the method for determining a delivery mode.

An embodiment of the present application provides core network (CN) function or an operation, administration and maintenance (OAM) platform, including a processor, and a memory storing a processor-executable program that, when executed by the processor, causes the processor to perform steps of the method for determining a delivery mode.

An embodiment of the present application provides a non-transitory computer-readable storage medium storing computer programs, that, when executed by a processor, causes a processor to perform the steps of the method for determining a delivery mode, which can be performed by access network (AN) function.

An embodiment of the present application provides a non-transitory computer-readable storage medium storing computer programs, that, when executed by a processor, causes a processor to perform the steps of the method for determining a delivery mode, which can be performed by a core network (CN) function or an operation, administration and maintenance (OAM) platform.

In the methods and apparatuses for determining a delivery mode, and equipment, and a storage medium according to the present embodiments, by determining MBS assistance information and sending the MBS assistance information to AN function, the AN function can determine the radio delivery mode for MBS service and/or radio resources for MBS service according to the MBS assistance information, the unified control of the AN delivery mode by the network can be achieved, the overall performance of the network can be optimized and the accuracy of determining the delivery mode can be increased.

### BRIEF DESCRIPTION OF THE DRAWINGS

In order to more clearly illustrate solutions disclosed in the embodiments of the present application or the prior art, the drawings used in the descriptions of the embodiments or the prior art will be briefly described below. The drawings in the following description are only certain embodiments of the present application, and other drawings can be obtained according to the drawings without any creative work for those skilled in the art.
FIG. 1 is a flowchart showing a method for determining a delivery mode according to an embodiment of the present application;
FIG. 2 is a flowchart showing a method for determining a delivery mode according to an embodiment of the present application;
FIG. 3 is an information interaction diagram of a method for determining a delivery mode according to an embodiment of the present application;
FIG. 4 is an information interaction diagram of a method for determining a delivery mode according to an embodiment of the present application;
FIG. 5 is an information interaction diagram of a method for determining a delivery mode according to an embodiment of the present application;
FIG. 6 is an information interaction diagram of a method for determining a delivery mode according to an embodiment of the present application;
FIG. 7 is a block diagram showing an apparatus for determining a delivery mode according to an embodiment of the present application;
FIG. 8 is a block diagram showing an apparatus for determining a delivery mode according to an embodiment of the present application; and
FIG. 9 is a schematic structural diagram of a network device according to an embodiment of the present application.

### DETAILED DESCRIPTION

In order to make the object, solutions and advantages of the embodiments of the present application more clear, the solutions in the embodiments of the present application are clearly and completely described in the following with reference to the accompanying drawings in the embodiments of the present application. These embodiments are a part of the embodiments of the present application, and not all of the embodiments. All other embodiments obtained by a person of ordinary skill in the art based on the embodiments of the present application without any creative work belong to the scope of the present application.

Data delivery modes used in an Internet Protocol (IP) network include unicast, multicast and broadcast. Unicast refers to "one-to-one" communication, that is, data is sent from one equipment to one receiver; while multicast/broadcast refer to "one-to-multi" communication, that is, the same data are sent from one sender to multiple receivers through techniques such as shared channels and content replication. Compared with unicast, multicast/broadcast has higher utilization efficiency of network resources. The difference between multicast and broadcast is that the receivers for multicast receives specific multicast service content (that is, data) by subscribing to and/or joining a group, and terminates the receiving of the service content by canceling the subscription and/or leaving the group, while any device within a broadcast area or network can receive broadcast content without subscribing to or joining a group.

Currently, the 5th generation (5G) mobile communication system can support unicast transmission. Moreover, the 5G mobile communication system will support multicast/broadcast data delivery to support more services. Therefore, that how to better manage these different data delivery modes is an urgent problem to be solved at present in the 5G mobile communication system.

For 5G MBS (multicast broadcast service), access network (AN) needs to not only determine the data delivery mode (that is, the radio delivery mode method (unicast, or multicast/broadcast) between the AN and the UE), but also adjust the delivery mode (from unicast to multicast/broadcast, or vice versa) according to changes in UE or network conditions to adopt or adjust the corresponding radio resource configuration, optimize resource usage and improve communication performance.

However, AN determines which delivery mode to use and the conversion of delivery mode according to its own statistics and local policies, which is high in implementation complexity, and the entire network lacks unified control of delivery mode of AN, which is not conducive to optimizing overall performance of the network.

In view of the problems above, the present embodiments provide methods and apparatuses for determining a delivery mode, and an equipment, and a storage medium to achieve the unified control of the AN delivery mode by the network is improved and optimize the overall performance of the network.

The methods and apparatuses will be described below through specific embodiments.

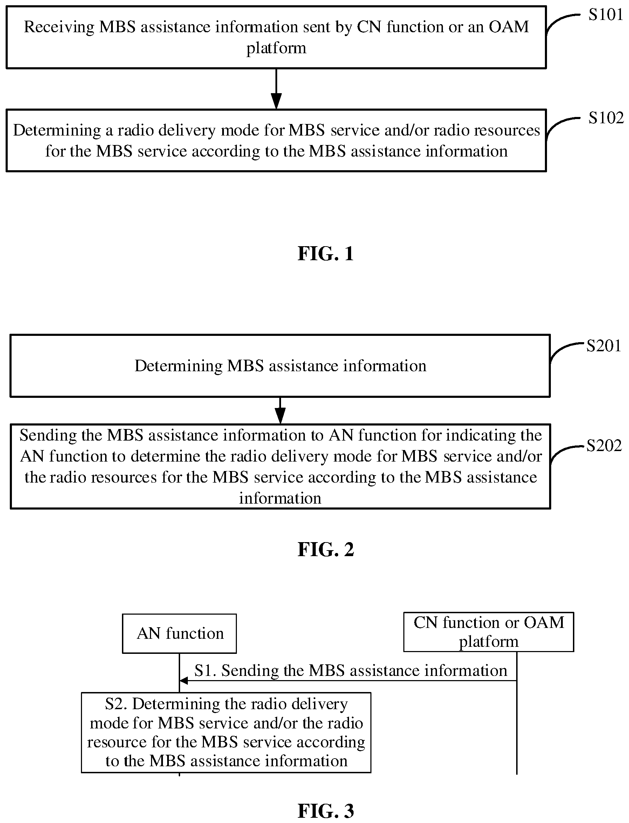

FIG. 1 is a flowchart showing a method for determining a delivery mode according to an embodiment of the present application. The method is performed by an access network (AN) function; as shown in FIG. 1, the method may include the following steps.

S101, receiving multicast broadcast service (MBS) assistance information sent by CN function or an operation, administration and maintenance (OAM) platform.

In an embodiment, the MBS assistance information is assistance information provided by the CN function or the OAM platform for the AN function and used to determine the radio delivery mode for MBS service and/or radio resources for MBS service.

The CN function may be network equipment such as an application function (AF), a policy control function (PCF), a session management function (SMF).

S102: determining a radio delivery mode for MBS service and/or radio resources for the MBS service according to the MBS assistance information.

In an embodiment, the radio delivery mode for MBS service may include delivery modes such as unicast, multicast, or broadcast. The radio delivery mode for MBS service is used to characterize a delivery mode corresponding to radio resources used for delivering MBS data between the AN function and the UE.

From the above embodiment, by receiving the MBS assistance information sent by the CN function or the OAM platform, and determining the radio delivery mode for MBS service and/or the radio resources for MBS service according to the MBS assistance information, the unified control of the AN delivery mode by the network is improved, the overall performance of the network is optimized and the accuracy of determining the delivery mode is increased.

Further, based on the above method, the MBS service in the above S102 may include a first MBS session or a quality of service (QoS) flow that is being established or modified, and/or a second MBS session or QoS flow with data transmission in progress.

From the above embodiments, the radio delivery mode and/or the radio resources for the first MBS session or QoS flow that is being established or modified, and/or the second MBS session or QoS flow with data transmission in progress can be determined according to the MBS assistance information and thus the complexity of determining the delivery mode by the AN function is reduced, and the efficiency of determining the delivery mode is improved.

Further, based on the above method, the MBS assistance information in the above S101 may include, but not limited to, one or more of the following information.
(1) the first number of user equipments (UEs), used for indicating that and the AN function is suggested to deliver the MBS service or session in a multicast or broadcast mode when the number of UEs that are receiving or expect to receive the MBS service or session under the AN function or a cell of the AN function reaches the first number of UEs.

In an embodiment, the first number of UEs may refer to the number of UEs suggested by the CN function or the OAM platform.

In addition, the AN function may determine to use multicast or broadcast delivery mode, or change the delivery mode from unicast to multicast or broadcast when the number of UEs that are receiving or expect to receive MBS services or sessions under the AN function or each cell or a specified cell of the AN function reaches the suggested number of UEs.

(2) the second number of UEs, where the second number of UEs is the number of UEs counted or predicted by the CN or OAM that are receiving or expect to receive MBS service or session under the AN function or a cell of the AN function.

In an embodiment, the second number of UEs may refer to the number of UEs statistically analyzed or predicted by the CN function or the OAM platform.

In addition, the AN function may determine to use multicast or broadcast delivery mode, or change the delivery mode from unicast to multicast or broadcast according to the statistically analyzed or predicted number of UEs or a local policy (for example, when the number is greater than a corresponding preset value, multicast or broadcast can be used).

(3) information of a delivery mode for the specified service or application or session or QoS flow.

In an embodiment, the information of a delivery mode of the specified service or application or session or QoS flow may indicate that whether the specified service or application or session or QoS flow is allowed to be delivered in a multicast or broadcast or unicast mode and whether the delivery mode is allowed to be changed, etc.

If a specified service/application/session or QoS flow is allowed to be delivered only in a certain delivery mode (for example, multicast (/broadcast)), the AN function only can use this delivery mode, and cannot use or change to another delivery mode.

The assistance information shown in the above (3) is related to the network policy. For example, in order to limit the use of network resources in the case of network congestion, the specified service/application/session or QoS flow can only be delivered in multicast or broadcast mode; while the specified service/application/session or QoS flow can only be delivered in unicast mode to ensure the quality of service of the specified service/application/session or QoS flow.

In an embodiment, the information of a delivery mode for the specified service or application or session or QoS flow in (3) may include that the specified service or application or session or QoS flow is allowed to be delivered in a multicast or broadcast mode only, or in a unicast mode only, or in both unicast and multicast or broadcast modes.

(4) UE subscription data related to MBS services.

In an embodiment, an identity for the UE subscription data related to MBS services may be represented by temporary mobile group identity (TMGI).

When the UE requests a specific MBS service through an air interface, the AN can check the UE subscription data related to MBS services. The AN can issue the MBS service data according to the request of the UE, or trigger the CN to issue the MBS service data only when the UE subscribes to the MBS service.

(5) UE capability information for delivery mode.

In an embodiment, the UE capability information for delivery mode can indicate that: whether the UE supports simultaneous delivery of multicast (or broadcast) and unicast data, whether the UE supports the switching between multicast (or broadcast) and unicast, and the like.

If the UE does not support the simultaneous delivery of multicast (or broadcast) and unicast data, the AN function determines the delivery mode of the UE's ongoing service as the delivery mode of a new service, that is, the delivery mode used by the UE is not changed;

If the UE does not support the switching between multicast (or broadcast) and unicast, the AN does not change the delivery mode of the UE's ongoing service.

(6) AN performance information.

In an embodiment, the AN performance information may refer to AN performance information counted or predicted by CN. The AN performance information may include:
AN status, for example, i) load, ii) resource usage, iv) congestion situation, etc. within AN or each cell or specific cell of the AN;
communication performance of the AN: for example, i) ratio of successful establishment of sessions, ii) abnormal release of QoS flow (e. g. times or ratios), iv) average rate, v) maximum rate and duration, etc. of a specific UE, a specific group of UEs (such as UE receiving the same MBS service) or some/all UEs within AN or each cell or in a specific cell of AN.

In addition, the AN can determine a delivery mode for a new MBS service or an ongoing MBS service (for example, delivering the new MBS service in a multicast or broadcast mode, or delivering the ongoing MBS services by changing into the multicast or broadcast mode) based on AN performance information statistically analyzed or predicted by the CN, as well as a local policy (for example, multicast or broadcast is used when the load of AN or one cell of the AN reaches 70% or the congestion level is medium-high); or,

The AN can determine the delivery mode for the new MBS service or an ongoing MBS service according to the AN performance information statistically analyzed or predicted by the CN and the policy provided by the CN.

(7) suggested information of the delivery mode used by the AN under the specified performance of AN.

For example, the new MBS service is delivered in the multicast or broadcast mode, or the ongoing MBS services is delivered by changing into the multicast or broadcast mode when one or more of the following conditions are satisfied:
(a) the load of AN or one cell of the AN has 70% or the congestion level is medium-high;
(b) ratio of successful establishment of sessions using unicast delivery of a specific UE, a specific group of UEs (such as UEs receiving the same MBS service) or 60% UE or all UEs within AN or each cell or in a specific cell of AN; and
(c) the peak rate of 50% of the UEs in the AN or one cell of the AN is higher than 200 M.

In addition, the AN can determine the delivery mode for the new MBS service or an ongoing MBS service according to the policy provided by the CN and the AN state or communication performance measured locally by the AN.

(8) CN performance information.

In an embodiment, the status of the CN function includes, for example, load and congestion condition.

In addition, the AN can determine the delivery mode for the new MBS service or an ongoing MBS service according to CN performance information and the local policy ((for example, multicast or broadcast is used when the load of AN or one cell of the AN reaches 70% or the congestion level is medium to high); or
the AN can determine the delivery mode for the new MBS service or an ongoing MBS service according to the CN performance information and the policy provided by the CN.

(9) suggested information or suggested policy for the delivery mode used by the AN under the specified performance of CN.

For example, when the load of CN function reaches 70% or the congestion level is medium-high, a new MBS service is delivered in a multicast or broadcast mode, or the ongoing MBS service is delivered by changing to the multicast or broadcast mode to reduce requirements for CN control plane and/or user plane resources.

The AN can determine the delivery mode for the new MBS service or an ongoing MBS service according to the policy provided by the CN and the local information of the AN (for example, the number of failed access attempts on the AMF). For example, the delivery mode is changed into multicast or broadcast mode when the number of failed access attempts on the AMF is greater than 4.

From the above embodiments, the radio delivery mode for the MBS service and/or radio resources for the MBS service can be determined based on one or more of the information included in the MBS assistance information, the implementation of determining the delivery mode by the AN function is diversified and the reliability of determining the delivery mode is improved.

Further, on the basis of the above method, the method may further include:
S103: determining the third number of UEs according to local measurements of the AN function or the second number of UEs, where the third number of UEs is the number of UEs that receive the MBS service or session under the AN function or a cell of the AN function; and
S104: determining that the radio delivery mode for the MBS service or session is multicast or broadcast radio delivery mode, and/or the radio resources for the MBS service or session are multicast or broadcast radio resources when the third number of UEs reaches the fourth number of UEs, where the fourth number of UEs is the first number of UEs or the minimum number of UEs that receives the MBS service or session in a multicast or broadcast mode determined by the AN function according to the local policy.

From the above embodiment, the radio delivery mode for the MBS service or session may be determined as a multicast or broadcast radio delivery mode, and/or the radio resources for the MBS service or session may be determined as multicast or broadcast radio resources when the number of UEs receiving the MBS service or session under the AN function or the cell of the AN function reaches the first number of UEs or the minimum number of UEs determined by the AN function according to the local policy, and thus the delivery mode is determined by combining the MBS assistance information with the local policy of the AN function and the accuracy of determining the delivery mode is increased.

Further, on the basis of the above method, the method may further include:
S105: receiving a radio resource control (RRC) message sent by the UE, where the RRC message includes a first identifier used for indicating the MBS service that the UE expects to receive,
where the first identifier referring to the identifier of the MBS service that the UE is expects to receive, such as: TMGI; and
S106: determining, for the UE, radio delivery mode for MBS service and/or radio resources for the MBS service when UE subscription data related to MBS services includes the MBS service that the UE expects to receive.

From the above embodiments, when the RRC message sent by the UE is received and the RRC message includes a first identifier used for indicating the MBS service that the UE expects to receive, the radio delivery mode for MBS service and/or the radio resources for the MBS service is determined for the UE and thus the corresponding radio delivery mode and/or radio resources can be determined according to UE requirements, which improves the pertinence of determining the delivery mode and saves resource consumption.

Further, on the basis of the above method, the information of a delivery mode for the specified service or application or session or QoS flow among the MBS assistance information in the above S101 may include that the specified service or application or session or QoS flow is allowed to be delivered in a multicast or broadcast mode only, or in a unicast mode only, or in both unicast and multicast or broadcast modes.

From the above embodiment, the AN function can directly determine the corresponding radio delivery method and/or radio resources according to the MBS assistance information when the information of a delivery mode for the specified service or application or session or QoS flow among the MBS assistance information may include that the specified service or application or session or QoS flow is allowed to be delivered in a multicast or broadcast mode only, or in a unicast mode only, or in both unicast and multicast or broadcast modes, which improves the efficiency of determining the delivery mode.

Further, based on the above method, the AN performance information is used for indicating the congestion status or communication performance of the AN; and/or the CN performance information is used for indicating the congestion status or communication performance of the CN. The S102 may be performed by using, but not limited thereto, the following steps:
S1021: determining a radio delivery mode for MBS service and/or radio resources for the MBS service or session according to the congestion status or communication performance of the AN and/or the congestion status or communication performance of the CN.

From the above embodiments that the AN function can determine the corresponding radio delivery mode and/or radio resources according to the congestion state or communication performance of the AN and/or the congestion state or communication performance of the CN, when, among the MBS assistance information, the AN performance information in the MBS assistance information is used for indicating the congestion state or communication performance of the AN; and/or the CN performance information is used for indicating the congestion state or communication performance of the CN; which improves the reliability of determining the delivery mode.

FIG. 2 is a flowchart showing a method for determining a delivery mode according to an embodiment of the present application. The method is performed by core network (CN) function or an operation, administration and maintenance (OAM) platform; as shown in FIG. 2, the method may include the following steps:
S201: determining multicast broadcast service (MBS) assistance information.

In an embodiment, the MBS assistance information is assistance information provided by the CN function or the OAM platform for the AN function and used to determine the radio delivery mode for MBS service and/or radio resources for MBS service.

In an embodiment, the MBS assistance information may include one or more of the following information:
the first number of user equipments (UEs), used for indicating that the AN function is suggested to deliver the MBS service or session in a multicast or broadcast mode when the number of UEs that are receiving or expect to receive the MBS service or session under the AN function or a cell of the AN function reaches the first number of LTEs;
the second number of UEs, where the second number of UEs is the number of UEs counted or predicted by the CN or OAM that are receiving or expect to receive MBS service or session under the AN function or a cell of the AN function;
information of a delivery mode for the specified service or application or session or QoS flow;
UE subscription data related to MBS services;
UE capability information for delivery mode;
AN performance information;
suggested information of the delivery mode used by the AN under the specified performance of AN;
CN performance information;
suggested information or suggested policy for the delivery mode used by the AN under the specified performance of CN.

S202: sending the MBS assistance information to AN function for indicating the AN function to determine the radio delivery mode for MBS service and/or the radio resources for the MBS service according to the MBS assistance information.

In an embodiment, the radio delivery mode for MBS service may include delivery modes such as unicast, multicast, or broadcast. The radio delivery mode for MBS service is used to characterize a delivery mode corresponding to radio resources used for delivering MBS data between the AN function and the UE.

From the above embodiments, by determining MBS assistance information and sending the MBS assistance information to AN function, the AN function can determine the radio delivery mode for MBS service and/or radio resources for MBS service according to the MBS assistance information, the unified control of the AN delivery mode by the network is improved, the overall performance of the network is optimized and the accuracy of determining the delivery mode is increased.

Further, on the basis of the above method, the MBS assistance information may be determined in S201 by the following schemes but not limited to:
determining, by the CN function or the OAM platform, the MBS assistance information based on one or more of the following parameters:
analytics information of network data;
MBS policy;
UE subscription data related to MBS services; or
information sent by the UE to the CN function through non-access stratum (NAS) signaling.

From the above embodiments, when determining the MBS assistance information, the SMF can determine the MBS assistance information based on one or more of analytics information of network data, an MBS policy, UE subscription data related to MBS services and information sent by the UE to the SMF through NAS signaling and send the determined MBS assistance information to the AN function and thus the AN function can determine the radio delivery mode for the MBS service and/or radio resources for the MBS service according to the MBS assistance information provided by the SMF, which improves the assistance control of the SMF to delivery mode of the AN, optimizes the overall performance of the network and improves the accuracy of determining the delivery mode.

Further, on the basis of the above method, the multicast broadcast service (MBS) assistance information may be determined in S201 by the following schemes but not limited to:
S2011: subscribing to or requesting analytics information of a network from the network data analytic function (NWDAF), and receiving the analytics information sent by the NWDAF.

In an embodiment, the analytics information provided by the NWDAF can be used to determine the MBS assistance information by the CN function.

In an embodiment, the analytics information may include, but not limited to, one or more of the following types:
service experience;
network performance;
user data congestion;
quality of service (QoS) sustainability;
network function (NF) load.

S2012: determining the MBS assistance information according to the analytics information.

From the above embodiments, when determining the MBS assistance information, the MBS assistance information can be determined through the analytics information of the network provided by the NWDAF and thus the accuracy of determining the MBS assistance information is improved.

Further, on the basis of the above method, subscribing to or requesting analytics information of a network from the network data analytic function (NWDAF), and receiving the analytics information sent by the NWDAF in S2011 may be performed by the following schemes but not limited thereto:
in case that the CN function is an application function (AF), subscribing to or requesting, by the AF, the analytics information from the NWDAF, and receiving the analytics information sent by the NWDAF; or subscribing to or requesting, by the AF, the analytics information from the NWDAF through a network exposure function (NEF) and receiving the analytics information sent by the NWDAF through the NEF; or
in case that the CN function is the PCF, subscribing to or requesting, by the PCF, the analytics information from the NWDAF, and receiving the analytics information sent by the NWDAF; or
in case that the CN function is the SMF, subscribing to or requesting, by the SMF, the analytics information from the NWDAF, and receiving the analytics information sent by the NWDAF.

Further, on the basis of the above method, the MBS assistance information may be determined according to the analytics information in S2012 by the following schemes but not limited to:
in case that the CN function is an AF, updating, by the AF, MBS service parameters according to the analytics information, and sending the updated MBS service parameters to a policy control function (PCF); or
in case that the CN function is a PCF, updating, by the PCF, MBS policies according to the analytics information and/or the updated MBS service parameters, and sending the updated MBS policies to the SMF; or
in case that the CN function is a SMF, determining, by the SMF, the MBS assistance information based on one or more of the following parameters:
   the analytics information;
   the updated MBS policies;
   UE subscription data related to MBS services, which is obtained by the SMF from the unified data management (UDM); or
   information sent by the UE to the SMF through non-access stratum (NAS) signaling.

From the above embodiments, when determining the MBS assistance information, each of AF, PCF and SMF may determine the MBS assistance information through the analytics information of the network provided by the NWDAF and thus the implementation of determining the delivery mode is diversified and the accuracy of determining the MBS assistance information is improved.

The methods for determining the delivery mode shown in FIG. 1 to FIG. 2 are described by using the following specific examples.

Example 1: CN function or OAM platform provides MBS assistance information to the AN function, as shown in FIG. 3.

S1, the CN function or the OAM platform sends the MBS assistance information to the AN function.

S2, the AN function determines a radio delivery mode for MBS service and/or radio resources for the MBS service according to the MBS assistance information.

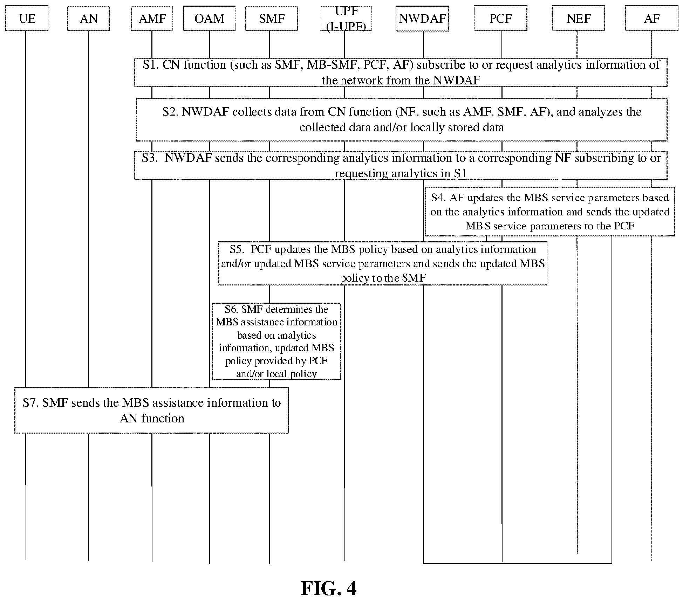

Example 2: the process of determining, by the CN function, MBS assistance information is shown in FIG. 4.

S 1, the CN network function (NF) (e. g, SMF, MB-SMF, PCF and/or AF) subscribe to or request analytics information of the network from the NWDAF.

In an embodiment, the analytics information may include one or more of the following types:
service experience;
network performance;
user data congestion;
QoS (quality of service) sustainability; or
NF load.

In an embodiment, the NF initiates a Nnwdaf_AnalyticsSubscription_Subscribe (or Nnwdaf_AnalyticsInfo_Request, used to request analytics information once, the same below) service request to the NWDAF for requesting the above types of analytics information.

When the NF is the AF, in addition to directly initiating the above request to the NWDAF, the AF can also request the above types of the analytics information through the NEF.

In an embodiment, AF initiates Nnef_AnalyticsExposure_Subscribe (or Nnef_AnalyticsExposure_Fetch, for requesting analytics information once) service request to NEF, and NEF accordingly initiates Nnwdaf_AnalyticsSubscription_Subscribe (or Nnwdaf_AnalyticsInfo_Request) service request to NWDAF for requesting the above types of the analytics information.

The above service requests may carry:
analytics id = service experience (or network performance, user data congestion, QoS sustainability), used for indicating the requested type;
target of analytics reporting, where the target of analytics reporting can be set as the temporary mobile group identifier (TMGI) (including the MBS service identifier), which means that statistics are made on UEs that receive the MBS service identified by the TMGI;
analytics filter information, where analytics filter information can include:
   area of interest indicating that statistics are made on the UE and/or services in this area; it can be set that area of interest = MBS service area (for example, one or more tracking areas (TA) or cell), and the MBS service area corresponding to the specific MBS services (for example, represented by TMGI), to make statistics on specific MBS services (such as service experience) in the MBS service area;
   delivery mode = unicast, or multicast, or broadcast, or any combination of the above delivery modes; or
   other information.

S2, NWDAF collects network data or service data from CN function (e. g. AMF, SMF, MB-SMF, PCF, NRF and/or AF) or OAM, and analyzes the collected data and/or locally stored (previously collected) data to obtain the analytics information requested in S1.

Specifically, the NWDAF initiates a Nnf_EventExposure_Subscribe service request to the NF, or sends a Subscribe request to the OAM for requesting to collect network data or service data for analyzing network data. When the NF is the AF, in addition to directly initiating a Naf_EventExposure_Subscribe request to the AF to collect service data, the NWDAF can also request the AF to collect service data through the NEF. Specifically, the NWDAF initiates the Nnef_EventExposure_Subscribe service request to the NEF, and the NEF initiates Naf_EventExposure_Subscribe to the AF accordingly for requesting to collect service data.

According to the type, the data collected by the NWDAF request may include:
data related to UE's MBS service (which can be identified using Application ID or TMGI) in a specific area or location (for example, a specific tracking area (TA), a tracking area list (TA list) or a cell;
input data required for service experience analytics, such as application service experience and QoS-related data;
input data required for network performance analytics, such as: access network status, load and performance, NF status;
input data required for user data congestion analytics, such as: data related to network performance and resource usage of the user plane and/or control plane; and/or
input data required for service quality continuity analytics, such as: RAN UE throughput, (that is, the average rate of UEs in a cell), QoS flow retention information (that is, the number of abnormal releases); and so on; and
input data required for network function load analytics, such as: network function load (NF load) and resource usage information (NF resource usage) requested from NRF and/or OAM.

In addition, the CN NF (such as SMF, MB-SMF, PCF, NRF, AF) from which the NWDAF collects data may be different from or the same as the CN function (such as SMF, MB-SMF, PCF, AF) that requests analytics information for network data in S 1.

S3, the NWDAF sends the corresponding analytics information to the corresponding NF according to the type subscribed or requested by the NF in S 1.

In an embodiment, the NWDAF initiates the Nnwdaf_AnalyticsSubscription_Notify service to the NF (or sends a response to the Nnwdaf_AnalyticsInfo_Request service request), which carries the analytics information corresponding to the subscribed or requested type. When the NF is the AF, in addition to directly initiating the above service (or sending the above response) to the AF, the NWDAF may also send above types of analytics information to the AF through the NEF.

In an embodiment, NWDAF initiates a Nnwdaf_AnalyticsSubscription_Notify service (or sends a response to a Nnwdaf_AnalyticsInfo_Request service request) to the NEF, and the NEF accordingly initiates a Nnef_AnalyticsExposure_Notify service to the AF (or sends a response to a Nnef_AnalyticsExposure_Fetch service request), and thus sends the above types of the analytics information to the AF.

According to the type, the analytics information may include:
information related to UE's MBS service in a specific area or location (for example, a specific tracking area, a tracking area list or a cell;
service experience statistics and/or predictions information, for example: statistics and/or predictions on service experience for an application (Application ID, Service Experience);
network performance statistics and/or predictions information, for example: statistics and/or predictions on AN performance, such as: 5G gNB status information, gNB resource usage information; number of UEs, communication performance (ratio of successful establishment of sessions), mobility performance (ratio of successful handover);
user data congestion statistics and/or predictions information, for example: statistics and/or predictions on network status indication, that is, congestion level;
quality of service (QoS) sustainability statistics and/or predictions information, for example: statistics and/or predictions on QoS indicators (such as RAN UE throughput, number of abnormal releasing of QoS) crossing a threshold; and
network function (NF) load statistics and/or predictions information, for example: statistics and/or predictions on NF load statistics, NF peak load, NF resource usage.

In an embodiment, the above analytics information may further include the corresponding delivery mode of the MBS service/application/session.

S4, the AF updates the MBS service parameters based on the analytics information provided by the NWDAF, such as service experience statistics and/or predictions information, network performance statistics and/or predictions information related to the MBS service in a specific area or location, and sends the updated MBS service parameters to the PCF.

For example, the AF may determine delivery mode information of the MBS service/application/session, or the delivery mode information of service data flows in the MBS service/application/session, for example: which MBS service(s)/application(s)/session(s) or service data flow(s) are allowed to adopt the multicast (or broadcast) delivery mode, and/or whether the delivery mode is allowed to be changed, using service experience statistics and/or predictions information for application in service experience analytics; and/or AN performance statistics and/or predictions information in network performance analytics; and/or the current delivery mode for the application (in AF local information or in the analytics).

The AF sends the updated MBS service parameters to the PCF. In an embodiment, the AF may:
(a) initiate a Nnef_ServiceParameter_Update service request to the NEF, and then the NEF initiates, to the PCF, a Npcf_PolicyAuthorization_Update service request carrying the MBS service/session identification information (such as TMGI, MBS service identifier, MBS session id, MBS flow description, application identifier), the updated MBS service parameters (for example, MBS service area, MBS QoS parameters, information on the delivery mode of service data flow), etc. or,
(b) (directly) initiate, to the PCF, a Npcf_PolicyAuthorization_Update service request carrying the parameters described in (a).

S5, the PCF updates the MBS policy based on one or more of the following parameters, and sends the updated MBS policy to the SMF:
a) analytics information provided by NWDAF, such as statistics or predictions information on specific MBS service related service experience, network performance, user data congestion and/or QoS sustainability in a specific area or location;
b) the updated MBS service parameters provided by the AF, including the updated MBS service parameters in S4; and
c) PCF local configuration (e.g., operator policy) or local information (e.g., current delivery mode of MBS service/application/session).

The MBS policy may include the following policies.
a) the number of UEs receiving a specific MBS service/session in multicast (or broadcast) mode within AN, suggested by CN. For example, the PCF can determine the suggested number using the following: statistics and/or predictions on the number of UEs, the AN performance information and/or communication performance among a specific area or location in the network performance analytics; and/or statistics and/or predictions information on service experience for an application in the service experience analytics; and/or statistics and/or predictions on network status indication in the user data congestion analytics; and/or statistics and/or predictions on a quality of service (QoS) indicator crossing a threshold in the QoS sustainability analytics; and/or the current delivery mode for the application (for PCF local information or in analytics information, the same below).
b) the information of a delivery mode of the specified service or application or session or QoS flow, for example, the specified service or application or session or QoS flow is whether allowed to be delivered in a multicast or broadcast or unicast mode and the delivery mode is whether allowed to be changed, etc.

In an embodiment, the PCF may determine the information of the delivery mode using the following: statistics and/or predictions on service experience information for an application in the service experience analytics; and/or statistics and/or predictions on the AN performance information; statistics and/or predictions on a QoS indicator crossing a threshold in the quality of service (QoS) sustainability analytics; and/or the current delivery mode for the application.

Or, the PCF determines the delivery mode information of the MBS service/application/session according to the delivery mode information of the MBS service/application/session provided by the AF and/or local configuration (e. g., operator policy). PCF determines QoS flow related information (such as QoS information, delivery mode information) according to the MBS service/application/session or service data flow information (such as QoS information, delivery mode information) and/or local configuration or local information provided by AF. For example, if the delivery mode of a certain MBS service/application/session or service data flow only allows multicast (or broadcast), the QoS flow for delivering the service data flow of this service/application/session is only allowed to use multicast (or broadcast).

It should be noted that PCF maps the service data flow to the QoS flow delivered within 5GS (that is, the QoS flow is used to deliver the service data flow).

c) suggested information (/suggested policy) of the delivery mode used by AN under the specified state or communication performance of the AN by CN. For example, the PCF may determine the suggested information (/suggested policy) using the following: statistics and/or predictions on the AN performance information and/or communication performance among a specific area or location in the network performance analytics; and/or statistics and/or predictions on service experience information for an application in the service experience analytics; and/or statistics and/or predictions on a quality of service (QoS) indicator crossing a threshold in the QoS sustainability analytics; and/or the current delivery mode for the application.

d) suggested information (/suggested policy) for the delivery mode used by the AN under the specified performance of CN by CN. For example, the PCF may determine the suggested information (/suggested policy) using the following: statistics and/or predictions on a network function (NF) load, a peak load and/or resource usage information in the network function load analytics; and/or statistics and/or predictions on service experience information for an application in the service experience analytics; and/or the current delivery mode for the application.

e) other policies.

The PCF initiates the Npcf_SMPolicyControl_UpdateNotify service to the SMF, which carries the MBS policy.

S6, the SMF determines the MBS assistance information based on one or more of the following parameters:
a) analytics information provided by NWDAF, such as statistics or predictions information on specific MBS service related service experience, network performance, user data congestion and/or QoS sustainability in a specific area or location;
b) MBS policy provided by PCF, including the updated MBS policy in S5;
c) UE's MBS-related subscription data obtained from UDM by SMF;
d) SMF local policy (such as the policy configured by the operator) or local information (such as the current delivery mode of the MBS service/application/session);
e) information sent by UE to SMF through NAS signaling.

In an embodiment, the SMF may determine UE subscription data related to MBS services and UE capability information for delivery mode using the MBS-related subscription data of the UE obtained from the UDM.

In an embodiment, the SMF may initiate a Nudm_SDM_Get or Nudm_SDM_Subscribe service request to the UDM to obtain the UE subscription data related to MBS services. In an embodiment, the service request may carry the MBS service capability indication for the UE. UDM replies Nudm_SDM_Get response to SMF or initiates Nudm_SDM_Notification service, which carries UE subscription data related to MBS services, including UE subscription data related to MBS services, and may also include UE capability information for delivery mode. The UE capability information for delivery mode may also be sent to the SMF by the UE through NAS signaling in the procedures of UE registration, PDU session establishment /modification, and/or MBS session establishment /modification.

S7, the SMF sends the MBS assistance information to the AN.

In an embodiment, the SMF may send an N2 message carrying the MBS assistance information to the AN function in the procedures of PDU session establishment/modification, MBS session establishment/modification, UE registration and/or service request.

In an embodiment, the SMF initiates the
Namf_Communication_N1N2MessageTransfer service request carrying an N2 message to the AMF, the N2 message carries the MBS assistance information. The AMF forwards the N2 message to the AN function.

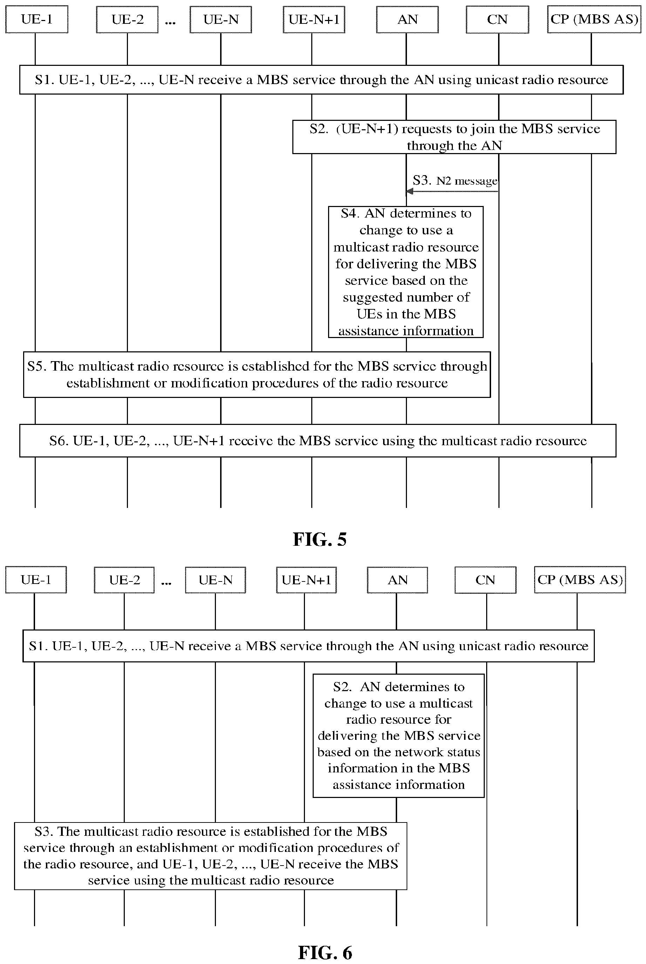

Example 3: the detail process of using MBS assistance information by the AN function is shown in FIG. 5.

S1, UE-1, UE-2...UE-N receives the MBS service using unicast radio delivery mode through AN nodes or the same cell (e. g., cell 1) of AN nodes.

1a-1), UE-1 (UE-2...UE-N) can indicate to the AN, or to the CN through the AN, that it is interested in the MBS service, that is, expects to receive the MBS service. In an embodiment, UE-1 (UE-2...UE-N) can learn which MBS services the cell supports through the cell broadcast information, and then indicates to the AN or CN that it expects to receive the MBS service by one or more of the following operations:
a) sending, to the AN, an RRC message carrying the identifier for the MBS service of interest (i.e., expects to receive), such as TMGI;
b) sending, to the AN, an RRC message carrying a NAS message (such as a PDU session establishment request or a PDU session modification request) sent to the CN, and the NAS message carrying the identifier of the MBS service of interest (that is, expects to receive), such as TMGI;
c) sending, to the CN, a MBS service request message (for example, an IGMP Join message) for an application layer using he user plane (i.e., data plane) resources of the established PDU session.

If (UE-N+1) requests to receive the MBS service (that is, (UE-1) indicates to CN that it expects to receive the MBS service through AN) using above b) or c) in step 1a-1), the CN sends, to the AN, N2 message carrying the identifier for (UE-1), the information of UE-1 requesting to join the MBS service (such as TMGI, Application ID), the QoS parameters of the QoS flow corresponding to the MBS service (such as 5QI), request AN to establish radio resources for (UE-1) to receive the MBS service data.

1a-2), the AN obtains the number (suggested number of UEs for short) of UEs that receives the specific MBS service/session using the multicast (or broadcast) mode suggested by CN from the MBS assistance information. When the number of UEs (considering the increase of (UE-1)) that currently receives the MBS service/session within the AN node or the cell 1 of the AN node does not reach the suggested number of UEs, then the AN determines to use the unicast radio delivery mode, allocate the radio resources corresponding to the unicast radio delivery mode for (UE-1), and sends the radio resource configuration to (UE-1), and (UE-1) establishes a unicast radio resource for receiving the MBS service/session data accordingly.

The number of UEs that currently receives the MBS service/session within the AN node or the cell 1 of the AN may be determined based on the number of UEs that are receiving or expect to receive MBS services or sessions counted by CN in the MBS assistance information or the number of UEs that are receiving or expect to receive MBS services or sessions measured or estimated by the CN.

In an embodiment, if (UE-1) requests to receive the MBS service using a) in step 1a-1) (that is, the UE indicates to the AN that it expects to receive the MBS service), according to the MBS service information subscribed by (UE-1) in the MBS assistance information, and the MBS service is included in the MBS service information subscribed by (UE-1), the AN may determines that radio resources for delivering the MBS service data between (UE-1) and the AN needs to be set up, continue to determine a radio delivery mode and radio resources of MBS service data for (UE-1) and otherwise, the AN rejects the request of (UE-1) to receive the MBS service.

In an embodiment, if the MBS assistance information includes the delivery mode information of a specific service/application/session or QoS flow, the AN further needs to rely on the assistance information and the information of the MBS service (such as TMGI, Application ID) or the QoS parameter (for example, 5QI) of the QoS flow corresponding to the MBS service to determine the radio delivery mode that the MBS service/application/session or QoS flow is allowed to use and/or whether to allow the change of the delivery mode. If only unicast (/multicast) is allowed, the AN can only use the unicast radio delivery mode for (UE-N+1); if the delivery mode is not allowed to change (after the MBS service/session is established), the AN can also consider/estimate the trend of the subsequent MBS service (for example, whether many UEs will join the service) to determine whether to use unicast or multicast to deliver the MBS service/session data.

1a-3), (UE-1) starts to receive the data of the MBS service using unicast radio delivery mode.

1b/1c), the process of UE-2...UE-N joining/receiving MBS service data and starting to receive the MBS service data using unicast radio delivery mode is similar to this.

S2, (UE-N+1) (i.e. the (N+1)th UE) within the AN node or cell 1 of the AN node indicates to the AN, or to the CN through the AN, that it is interested in the MBS service, that is, it expects to receive the MBS service.

S3, if (UE-N+1) adopts b) or c) in stepla-1) to request to receive the MBS service (that is, (UE-N+1) indicates to CN through AN that it expects to receive the MBS service), CN sends, to AN, a N2 message carrying the identifier for (UE-N+1, the information of the MBS service that (UE-N+1) requests to join (such as TMGI, Application ID), the QoS parameters (such as 5QI) of the QoS flow corresponding to the MBS service, etc., requests AN for establishing radio resources to for (UE-N+1) to receive the MBS service data.

S4, according to the suggested number of UEs in the MBS assistance information, the AN determines that the number of UEs receiving the MBS service/session in the AN node or cell 1 of the AN node at this time (taking into account the increase of (UE-N+1)) reaches the suggested number of UEs, Therefore, it is determined that the AN node or the cell 1 of the AN node delivers the MBS service/session using the multicast radio delivery mode.

In an embodiment, if (UE-N+1) requests to receive the MBS service using a) in step 1a-1) (that is, the UE indicates to the AN that it expects to receive the MBS service), according to the MBS service information subscribed by (UE-N+1) in the MBS assistance information, and the MBS service is included in the MBS service information subscribed by (UE- N+ 1), the AN may determines that radio resources for delivering the MBS service data between (UE- N+1) and the AN needs to be set up, continue to determine a radio delivery mode and radio resources of MBS service data for (UE- N+1) and otherwise, the AN rejects the request of (UE-N+1) to receive the MBS service and the process ends here.

In an embodiment, if the MBS assistance information includes the delivery mode information of a specific service/application/session or QoS flow, the AN also needs to determine the radio delivery mode that the MBS service/application/session or QoS flow is allowed to use and/or whether to allow the change of the delivery mode based on the assistance information and the information of the MBS service (such as TMGI, Application ID) or the QoS parameter of the QoS flow (for example, 5QI) corresponding to MBS service. If only unicast (/multicast) is allowed, or the delivery mode is not allowed to change (after the session is established), then the AN can only use the unicast radio delivery mode for (UE-N+1), allocate radio resources corresponding to the unicast radio delivery mode for (UE-N+1), and send the radio resources configuration to (UE-N+1), and (UE-N+1) establishes a unicast radio resource accordingly to receive the MBS service/session data. Subsequent steps are not performed.

S5, the AN allocates the multicast radio resource for delivering the MBS service/session. UE-1, UE-2, ..., UE-N+1 thus establish the multicast radio resource to receive the MBS service/session data by the following way a or way b.

Way a: 5a-1), the AN sends an RRC message to (UE-N+1), for requesting to establish a multicast radio resource for delivering the MBS service/session data. 5a-2. The AN sends an RRC message to UE-1, UE-2...UE-N for requesting UE-1, UE-2...UE-N to modify the unicast radio resource for receiving the MBS service/session data to a multicast radio resource.

Way b: 5b-1), the AN establishes a multicast radio resource for delivering the MBS service/session data. UE-N+1 receives the MBS service/session data through the multicast radio resource.

5b-2), the AN sends, to UE-1, UE-2, ..., UE-N, an RRC message carrying an indication that the MBS service/session is delivered using a multicast radio delivery mode (or multicast radio resource). UE-1, UE-N-2, ..., UE-N receives the MBS service/session data using the multicast radio resource according to the indication, and releases the corresponding unicast radio resource. Alternatively, UE-1, UE-2, ..., UE-N monitors the multicast radio resource for delivering the MBS service/session data (for example, the TMGI for delivering the MBS service/session in a specific multicast radio channel/ slot), UE-1, UE-2...UE-N receives the MBS service/session data using the multicast radio resource and releases corresponding unicast radio resources.

UE-1, UE-2, ..., UE-N+1 starts to receive the MBS service data using multicast radio delivery mode.

Example 4, CN function or OAM platform provides MBS assistance information to the AN function, as shown in FIG. 6.

S 1, the AN node or one or more cells of the AN node receive MBS service data from the CN. UE-1, UE-2, ..., UE-N receive the MBS service through the AN node or the same cell (for example, cell 1) of the AN node using a unicast radio resource.

S2, the AN node receives the MBS assistance information updated by the CN, or periodically monitors the MBS assistance information, or locally monitors changes in the AN performance or performance CN (for example, the AN load is high, or the CN continues to reject messages from the AN), or at triggered by other events/conditions, the AN determines to change the radio delivery mode for MBS service in the AN node or in cell 1 of the AN node to multicast based on the AN performance information and/or suggested information (/suggested policy) of the delivery mode used by AN under the specified state or communication performance of the AN by CN in the MBS assistance information and/or CN performance information and/or suggested information (/suggested policy) of the delivery mode used by AN under the specified state or communication performance of the CN by CN in the MBS assistance information.

S3, the AN allocates multicast radio resources for delivering the MBS service/session. UE-1, UE-2, ..., UE-N establishes a multicast radio resource to receive the MBS service/session data.

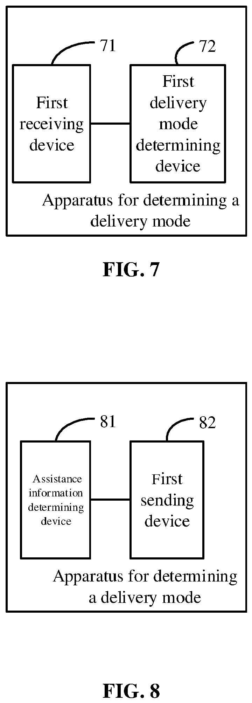

FIG. 7 is a block diagram showing an apparatus for determining a delivery mode according to an embodiment of the present application. The apparatus is applied to an access network (AN) function. As shown in FIG. 7, the apparatus may include:
a first receiving device 71, configured to receive multicast broadcast service (MBS) assistance information sent by core network (CN) function or an operation, administration and maintenance (OAM) platform; and
a first delivery mode determining device 72, configured to determine a radio delivery mode for MBS service and/or radio resources for the MBS service according to the MBS assistance information.

Further, based on the above apparatus the MBS service includes a first MBS session or a quality of service (QoS) flow that is being established or modified, and/or a second MBS session or QoS flow with data transmission in progress.

Further, on the basis of the apparatus mentioned above, the MBS assistance information includes one or more of:
the first number of user equipments (UE), used for indicating that the AN function is suggested to deliver the MBS service or session in a multicast or broadcast mode when the number of UE that are receiving or expect to receive the MBS service or session under the AN function or a cell of the AN function reaches the first number of UE;
the second number of UEs, where the second number of UEs is the number of UEs counted or predicted by the CN or OAM that are receiving or expect to receive MBS service or session under the AN function or a cell of the AN function;
information of a delivery mode of the specified service or application or session or quality of service (QoS) flow;
UE subscription data related to MBS services;
UE capability information for delivery mode;
AN performance information;
suggested information of the delivery mode used by AN under the specified state or communication performance of the AN;
CN performance information, including CN performance statistics or predictions information; or
suggested information or suggested policy for the delivery mode used by the AN under the specified performance of CN.

Further, on the basis of the apparatus mentioned above, it further includes:
a UE number determining device, configured to determine the third number of UEs according to local measurements of the AN function or the second number of UEs, where the third number of UEs is the number of UEs that receive the MBS service or session under the AN function or a cell of the AN function; and
a second delivery mode determining device, configured to determine that the radio delivery mode for the MBS service or session is multicast or broadcast radio delivery mode, and/or the radio resources for the MBS service or session are multicast or broadcast radio resources when the third number of UEs reaches the fourth number of UEs, the fourth number of UEs being the first number of UEs or the minimum number of UEs that receives the MBS service or session in a multicast or broadcast mode determined by the AN function according to the local policy.

Further, on the basis of the apparatus mentioned above, the apparatus further includes:
a second receiving device, configured to receive a radio resource control (RRC) message sent by UE, where the RRC message includes a first identifier used for indicating the MBS service that the UE expects to receive;
a third delivery mode determining device, configured to determine, for the UE, radio delivery mode for MBS service and/or radio resources for the MBS service when tUE subscription data related to MBS services includes the MBS service that the UE expects to receive.

Further, on the basis of the apparatus mentioned above, the information of a delivery mode for the specified service or application or session or QoS flow includes that the specified service or application or session or QoS flow is allowed to be delivered in a multicast or broadcast mode only, or in a unicast mode only, or in both unicast and multicast or broadcast modes.

Further, on the basis of the apparatus mentioned above, the CN performance information is used for indicating a congestion status or communication performance of the AN; and/or the CN performance information is used for indicating a congestion status or communication performance of the CN; and
the first delivery mode determining device is configured to determine a radio delivery mode for MBS service and/or radio resources for the MBS service or session according to the congestion status or communication performance of the AN and/or the congestion status or communication performance of the CN.

It should be noted here that the above terminal can perform all steps of the apparatus embodiments and achieve the same beneficial effects, and the same steps of the method and the same beneficial effects in the terminal as the apparatus embodiments will not be repeated here.

FIG. 8 is a block diagram showing an apparatus for determining a delivery mode according to an embodiment of the present application. The apparatus is applied to a core network (CN) function or an operation, administration and maintenance (OAM) platform. As shown in FIG. 8, the apparatus may include:
an assistance information determining device 81, configured to determine multicast broadcast service (MBS) assistance information; and
a first sending device 82, configured to send the MBS assistance information to an access network (AN) function for indicating the AN function to determine the radio delivery mode for MBS service and/or the radio resources for the MBS service according to the MBS assistance information.

Further, on the basis of the apparatus mentioned above,
the assistance information determining device is further configured to determine the MBS assistance information based on one or more of the following parameters:
analytics information of network data;
MBS policy;
UE subscription data related to MBS services; or
information sent by the UE to the CN function through non-access stratum (NAS) signaling.

Further, on the basis of the apparatus mentioned above, the apparatus for determining a delivery mode, further includes,
a second sending device, configured to subscribe to or request analytics information of a network from a network data analytic function (NWDAF); and
a receiving module, configured to receive the analytics information sent by the NWDAF,
where the assistance information determining device is further configured to determine the MBS assistance information according to the analytics information.

Further, on the basis of the apparatus mentioned above, the analytics information includes one or more of the following types:
service experience;
network performance;
user data congestion;
quality of service (QoS) sustainability;
network function (NF) load.

Further, on the basis of the apparatus mentioned above,
in case that the CN function is application function (AF), the apparatus for determining a delivery mode further includes:
a first updating device, configured to update MBS service parameters according to the analytics information;
a third sending device, configured to send the updated MBS service parameters to a policy control function (PCF); or
in case that the CN function is the PCF, the apparatus further includes:
   a second updating device, configured to update MBS policies according to the analytics information and/or the updated MBS service parameters;
   a fourth sending device, configured to send the updated MBS policy to the SMF; or
in case that the CN function is the SMF, the apparatus further includes:
   the assistance information determining device is configured to determine the MBS assistance information based on one or more of the following parameters:
   the analytics information;
   the updated MBS policies;
   UE subscription data related to MBS services; or
   information sent by the UE to the SMF through non-access stratum (NAS) signaling.

Further, on the basis of the apparatus mentioned above, the MBS assistance information includes one or more of:
the first number of user equipments (UEs), used for indicating that the AN function is suggested to deliver the MBS service or session in a multicast or broadcast mode when the number of UEs that are receiving or expect to receive the MBS service or session under the AN function or a cell of the AN function reaches the first number of UEs;
the second number of UEs, where the second number of UEs is the number of UEs counted or predicted by the CN or OAM that are receiving or expect to receive MBS service or session under the AN function or a cell of the AN function;
information of a delivery mode of the specified service or application or session or quality of service (QoS) flow;
UE subscription data related to MBS services;
UE capability information for delivery mode;
AN performance information;
suggested information of the delivery mode used by AN under the specified state or communication performance of the AN;
CN performance information, including CN performance statistics or predictions information;
suggested information or suggested policy for the delivery mode used by the AN under the specified performance of CN.

It should be noted here that the above terminal can perform all steps of the apparatus embodiments and achieve the same beneficial effects, and the same steps of the method and the same beneficial effects in the terminal as the apparatus embodiments will not be repeated here.

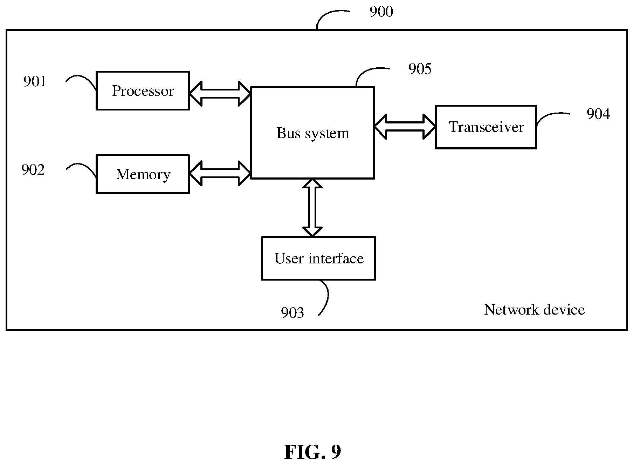

FIG. 9 is a schematic structural diagram of a network device according to an embodiment of the present application. As shown in FIG. 9, the network device 900 may include at least one processor 901, a memory 902, at least one other user interface 903, and a transceiver 904. Respective components in the network device 900 are coupled together through the bus system 905. It is understood that the bus system 905 is used to connect and communicate between these components. In addition to the data bus, the bus system 905 further includes a power bus, a control bus and a status signal bus. However, for the sake of clarity, in FIG. 9 respective buses are labeled as the bus system 905, and the bus system may include any number of interconnected buses and bridges, which are linked together through various circuits of one or more processors represented by processor 901 and one or more memories represented by the memory 902. The bus system can also link together various other circuits, such as peripherals, voltage regulators, and power management circuits, which are well known in the art, and therefore will not be further described in the embodiments of the present application. The bus interface provides an interface. Transceiver 904 may be a number of elements, including a transmitter and a receiver, that provide a means for communicating with various other devices over a transmission medium. For different user equipment, the user interface 903 may also be an interface capable of externally or internally connecting the required equipment, and the connected equipment includes, but not limited to, a keypad, a display, a speaker, a microphone, a joystick, and the like.

It can be understood that the memory 902 in the present embodiment of the present application may be a volatile memory or a non-volatile memory, or may include both volatile and non-volatile memory. The non-volatile memory may be read-only memory (ROM), programmable read-only memory (PROM), erasable programmable read-only memory (Erasable PROM, EPROM), erase programmable read-only memory (Electrically EPROM, EEPROM) or flash memory. The volatile memory may be random access memory (RAM), which is used as an external cache. By way of example and not limitation, many forms of RAM are available, such as static RAM (SRAM), dynamic RAM (DRAM), synchronous DRAM (SDRAM), double data rate SDRAM (DDRSDRAM), enhanced SDRAM (ESDRAM), Synchlink DRAM (SLDRAM) and direct Rambus RAM (DRRAM). The memory 902 of the systems and methods described in various embodiments of the present application is intended to include, but not be limited to, these and any other suitable types of memory.

The processor 901 is responsible for managing the bus system and general processing, and the memory 902 can store computer programs or instructions used by the processor 901 when performing operations.

The methods disclosed in the above embodiments of the present application may be applied to the processor 901 or implemented by the processor 901. The processor 901 may be an integrated circuit chip with signal processing capability. In the implementation process, each step of the above methods may be completed by an integrated logic circuit of hardware in the processor 901 or an instruction in the form of software. The above processor 901 may be a general purpose processor, a digital signal processor (DSP), an application specific integrated circuit (ASIC), a field programmable gate array (FPGA) or other programmable logic devices, discrete gate or transistor logic devices, discrete hardware components. The methods, steps, and logic block diagrams disclosed in the embodiments of this application may be implemented or executed. A general purpose processor may be a microprocessor or the processor may be any conventional processor and the like. The steps of the method disclosed in conjunction with the embodiments of the present application may be directly embodied as executed by a hardware decoding processor, or executed by a combination of hardware and software modules in the decoding processor. The software modules may be located in random access memory, flash memory, read-only memory, programmable read-only memory or electrically erasable programmable memory, registers and other storage media mature in the art. The storage medium is located in the memory 902, and the processor 901 reads the information in the memory 902, and completes the steps of the above methods in combination with its hardware.

It will be appreciated that the embodiments described herein may be implemented in hardware, software, firmware, middleware, microcode, or a combination thereof. For hardware implementation, the processing unit may be implemented in one or more application specific integrated circuits (ASIC), digital signal processing (DSP), DSP device (DSPD), programmable logic device (PLD), field-programmable gate array (FPGA), general purpose processor, controller, microcontroller, microprocessor, other electronic unit for performing the functions described in this application or a combination thereof.

For software implementation, the described techniques can be implemented through modules (such as procedures, functions and the like) that perform the functions described in the embodiments of the present application. Software codes can be stored in memory and executed by a processor. The memory can be implemented in the processor or external to the processor.

In an embodiment, the network device in FIG. 9 may be an access network device. The processor 901 may be used for:
receiving multicast broadcast service (MBS) assistance information sent by core network (CN) function or an operation, administration and maintenance (OAM) platform; and
determining a radio delivery mode for MBS service and/or radio resources for the MBS service according to the MBS assistance information.

In another embodiment, the MBS service includes a first MBS session or a quality of service (QoS) flow that is being established or modified, and/or a second MBS session or QoS flow with data transmission in progress.

In another embodiment, the MBS assistance information includes one or more of the following information:
the first number of user equipments (UEs), used for indicating that the AN function is suggested to deliver the MBS service or session in a multicast or broadcast mode when the number of UEs that are receiving or expect to receive the MBS service or session under the AN function or a cell of the AN function reaches the first number of LTEs;
the second number of UEs, where the second number of UEs is the number of UEs counted or predicted by the CN or OAM that are receiving or expect to receive MBS service or session under the AN function or a cell of the AN function;
information of a delivery mode for the specified service or application or session or QoS flow;
UE subscription data related to MBS services;
UE capability information for delivery mode;
AN performance information;
suggested information of the delivery mode used by the AN under the specified performance of AN;
CN performance information;
suggested information or suggested policy for the delivery mode used by the AN under the specified performance of CN.

In still yet another embodiment, the processor 901 may be further used for:
determining the third number of UEs according to local measurements of the AN function or the second number of UEs, where the third number of UEs is the number of UEs that receive the MBS service or session under the AN function or a cell of the AN function; and
determining that the radio delivery mode for the MBS service or session is multicast or broadcast radio delivery mode, and/or the radio resources for the MBS service or session are multicast or broadcast radio resources when the third number of UEs reaches the fourth number of UEs, where the fourth number of UEs is the first number of UEs or the minimum number of UEs that receives the MBS service or session in a multicast or broadcast mode determined by the AN function according to the local policy.

In still yet another embodiment, the processor 901 may be further used for:
receiving a radio resource control (RRC) message sent by the UE, where the RRC message includes a first identifier used for indicating the MBS service that the UE expects to receive;
determining, for the UE, radio delivery mode for MBS service and/or radio resources for the MBS service when the UE subscription data related to MBS services includes the MBS service that the UE expects to receive.

In still yet another embodiment, the information of a delivery mode for the specified service or application or session or QoS flow includes that the specified service or application or session or QoS flow is allowed to be delivered in a multicast or broadcast mode only, or in a unicast mode only, or in both unicast and multicast or broadcast modes.

In still yet another embodiment, the CN performance information is used for indicating a congestion status or communication performance of the AN; and/or the CN performance information is used for indicating a congestion status or communication performance of the CN; and
the determining a radio delivery mode for MBS service and/or radio resources for the MBS service according to the MBS assistance information, includes:
determining a radio delivery mode for MBS service and/or radio resources for the MBS service or session according to the congestion status or communication performance of the AN and/or the congestion status or communication performance of the CN.

The AN function according to the embodiment of the present application may perform various processes implemented by the AN function in the foregoing embodiments, and details are not described herein again to avoid repetition.

From the above embodiment, by receiving the MBS assistance information sent by the CN function or the OAM platform, and determining the radio delivery mode for MBS service and/or the radio resources for MBS service according to the MBS assistance information, the unified control of the AN delivery mode by the network is improved, the overall performance of the network is optimized and the accuracy of determining the delivery mode is increased.

The solutions according to the embodiments of the present application have been described from the perspective of AN function. It can be understood that, in order to provide the above-mentioned functions, the AN function provided by the embodiments of the present application includes corresponding hardware structures and/or software modules for executing each function. It should be appreciated for those skilled in the art that the present application can be implemented in hardware or a combination of hardware and computer software with the units and algorithm steps of each example described in conjunction with the embodiments disclosed in the present application.

In an embodiment, the network device in FIG. 9 may be core network (CN) function or an operation, administration and maintenance (OAM) platform. The processor 901 may be used for:
determining multicast broadcast service (MBS) assistance information; and
sending the MBS assistance information to access network (AN) function for indicating the AN function to determine the radio delivery mode for MBS service and/or the radio resources for the MBS service according to the MBS assistance information.

In still yet another embodiment, the determining MBS assistance information includes:
determining, by the CN function or the OAM platform, the MBS assistance information based on one or more of the following parameters:
analytics information of network data;
MBS policy;
UE subscription data related to MBS services; or
information sent by the UE to the CN function through non-access stratum (NAS) signaling.

In still yet another embodiment, the determining MBS assistance information includes:
subscribing to or requesting analytics information of a network from the network data analytic function (NWDAF), and receiving the analytics information sent by the NWDAF; and
determining the MBS assistance information according to the analytics information.

In still yet another embodiment, the subscribing to or requesting analytics information of a network from the NWDAF, and receiving the analytics information sent by the NWDAF, includes:
in case that the CN function is an application function (AF), subscribing to or requesting, by the AF, the analytics information from the NWDAF, and receiving the analytics information sent by the NWDAF; or subscribing to or requesting, by the AF, the analytics information from the NWDAF through a network exposure function (NEF) and receiving the analytics information sent by the NWDAF through the NEF; or
in case that the CN function is a policy control function (PCF), subscribing to or requesting, by the PCF, the analytics information from the NWDAF, and receiving the analytics information sent by the NWDAF; or
in case that the CN function is the SMF, subscribing to or requesting, by the SMF, the analytics information from the NWDAF, and receiving the analytics information sent by the NWDAF.

In still yet another embodiment, the analytics information includes one or more of the following types:
service experience;
network performance;
user data congestion;
quality of service (QoS) sustainability; or
network function (NF) load.

In still yet another embodiment, the determining the MBS assistance information according to the analytics information, includes:
in case that the CN function is an AF, updating, by the AF, MBS service parameters according to the analytics information, and sending the updated MBS service parameters to a policy control function (PCF); or
in case that the CN function is a PCF, updating, by the PCF, MBS policies according to the analytics information and/or the updated MBS service parameters, and sending the updated MBS policies to the SMF; or
in case that the CN function is a SMF, determining, by the SMF, the MBS assistance information based on one or more of the following parameters:
   the analytics information;
   the updated MBS policies;
   UE subscription data related to MBS services, which is obtained by the SMF from the unified data management (UDM); or
   information sent by the UE to the SMF through non-access stratum (NAS) signaling.

The CN function or the OAM platform according to the embodiment of the present application may perform various processes implemented by the CN function or the OAM platform in the foregoing embodiments, and details are not described herein again to avoid repetition.

From the above embodiments, by determining MBS assistance information and sending the MBS assistance information to an AN function, the AN function can determine the radio delivery mode for MBS service and/or radio resources for MBS service according to the MBS assistance information, the unified control of the AN delivery mode by the network is improved, the overall performance of the network is optimized and the accuracy of determining the delivery mode is increased.

The solutions according to the embodiments of the present application have been described from the perspective of the CN function or the OAM platform. It can be understood that, in order to provide the above-mentioned functions, the CN function or the OAM platform provided by the embodiments of the present application includes corresponding hardware structures and/or software modules for executing each function. It should be appreciated for those skilled in the art that the present application can be implemented in hardware or a combination of hardware and computer software with the units and algorithm steps of each example described in conjunction with the embodiments disclosed in the present application.

Whether certain function is executed by a computer software or driving hardware depends on the specific application and design constraint conditions of the technical solution. Professionals and technicians can use different methods for each specific application to implement the described functions, but such implementation should not be considered beyond the scope of the present application.

In the embodiments of the present application, the base station can be divided into functional modules and the like according to the foregoing method examples. For example, each functional module can be divided corresponding to each function, or two or more functions can be integrated into a processing device. The above-mentioned integrated unit can be implemented in the form of hardware or software functional unit.

It should be noted that, the division of modules in the embodiments of the present application is schematic, and is only a logical function division, and there may be other division manners in actual implementation.

Those skilled in the art can clearly understand that, for the convenience and conciseness of the description, only the division of the above-mentioned functional modules is used for illustration. In practical applications, the above-mentioned functions can be allocated to different functional modules as required. The internal structure of the device is divided into different functional modules to complete all or part of the functions described above. For the specific working process of the system, apparatus and unit described above, reference may be made to the corresponding process in the foregoing method embodiments, and details are not described herein again.

In the several embodiments provided in the present application, it should be understood that the disclosed device and method may be implemented in other manners. For example, the device embodiments described above are only illustrative. For example, the division of the modules or units is only a logical function division and there may be other division methods in actual implementation. For example, multiple units or elements may be Incorporation may either be integrated into another system, or some features may be omitted, or not implemented. On the other hand, the shown or discussed mutual coupling or direct coupling or communication connection may be indirect coupling or communication connection of devices or units through some interfaces.

The units described as separate components may or may not be physically separate, and the components displayed as units may or may not be physical units, that is, may be located at the same place, or it can be distributed to multiple network units. Some or all of the units may be selected according to actual needs to achieve the purpose of the solution of the present embodiment.

In addition, the functional units in the various embodiments of the present application may be integrated into one processing unit, or each unit may exist alone physically, or two or more units may be integrated into one unit. The above-mentioned integrated units may be implemented in the form of software functional units.

If the integrated unit is implemented in the form of a software functional unit and sold or used as an independent product, it can be stored in a computer readable storage medium. Based on such understanding, a part of or all the solutions may be embodied in the form of a software product, which is stored in a storage medium, including several instructions to cause a computer device (which may be a personal computer, server, or network device, etc.) to perform all or part of the steps of the methods described in the respective embodiments of the present application. The present application provides a non-transitory computer-readable storage medium having stored thereon computer programs, when executed by the processor, the computer programs are configured to implement the steps of the method mentioned above according to the embodiments, including:

The present application provides a non-transitory computer-readable storage medium having stored thereon computer programs, when executed by the processor, the computer programs are configured to implement the steps of the method mentioned above according to the embodiments, including:
receiving multicast broadcast service (MBS) assistance information sent by core network (CN) function or an operation, administration and maintenance (OAM) platform; and
determining a radio delivery mode for MBS service and/or radio resources for the MBS service according to the MBS assistance information.

The present application provides a non-transitory computer-readable storage medium having stored thereon computer programs, when executed by the processor, the computer programs are configured to implement the steps of the method mentioned above according to the embodiments, including:
determining multicast broadcast service (MBS) assistance information; and
sending the MBS assistance information to access network (AN) function for indicating the AN function to determine the radio delivery mode for MBS service and/or the radio resources for the MBS service according to the MBS assistance information.

It should be noted here that the above terminal can perform all steps of the method embodiments and achieve the same beneficial effects, and the same steps of the method and the same beneficial effects in the terminal as the method embodiments will not be repeated here.

Finally, it should be noted that the above embodiments are only used to explain the technical solutions of the present application, and are not limited thereto; although the present application has been described in detail with reference to the foregoing embodiments, it should be understood by those skilled in the art that they can still modify the technical solutions documented in the foregoing embodiments and make equivalent substitutions to a part of the technical features; these modifications and substitutions do not make the essence of the corresponding technical solutions depart from the spirit and scope of the technical solutions of various embodiments of the present application.

## Claims

1. A method for determining a delivery mode, performed by access network, AN, function, comprising:
receiving multicast broadcast service, MBS, assistance information sent by core network, CN, function or an operation, administration and maintenance, OAM, platform; and
determining a radio delivery mode for MBS service and/or radio resources for the MBS service according to the MBS assistance information.

2. The method of claim 1, wherein the MBS service comprises a first MBS session or a quality of service, QoS, flow that is being established or modified, and/or a second MBS session or QoS flow with data transmission in progress.

3. The method of claim 1, wherein the MBS assistance information comprises one or more of the following information:
the first number of user equipments, UEs, used for indicating that the AN function is suggested to deliver MBS service or session in a multicast or broadcast mode when the number of UEs that are receiving or expect to receive the MBS service or session under the AN function or a cell of the AN function reaches the first number of LTEs;
the second number of UEs, wherein the second number of UEs is the number of UEs counted or predicted by the CN or OAM that are receiving or expect to receive MBS service or session under the AN function or a cell of the AN function;
information of a delivery mode for specified service or application or session or QoS flow;
UE subscription data related to MBS services;
UE capability information for delivery mode;
AN performance information;
suggested information of the delivery mode used by the AN under specified performance of AN;
CN performance information; or
suggested information or suggested policy for the delivery mode used by the AN under specified performance of CN.

4. The method of claim 3, further comprising:
determining the third number of UEs according to local measurement of the AN function or the second number of UEs, wherein the third number of UEs is the number of UEs that receive the MBS service or session under the AN function or a cell of the AN function; and
determining, by the AN function, that the radio delivery mode for the MBS service or session is multicast or broadcast radio delivery mode, and/or the radio resources for the MBS service or session are multicast or broadcast radio resources when the third number of UEs reaches the fourth number of UEs, wherein the fourth number of UEs is the first number of UEs or the minimum number of UEs that receive the MBS service or session in a multicast or broadcast mode determined by the AN function according to the local policy.

5. The method of claim 3, further comprising:
receiving a radio resource control, RRC, message sent by the UE, wherein the RRC message includes a first identifier used for indicating MBS service that the UE expects to receive;
determining, for the UE, radio delivery mode for MBS service and/or radio resources for the MBS service when the UE subscription data related to MBS services includes the MBS service that the UE expects to receive.

6. The method of claim 3, wherein the information of a delivery mode for the specified service or application or session or QoS flow includes that the specified service or application or session or QoS flow is allowed to be delivered in a multicast or broadcast mode only, or in a unicast mode only, or in both unicast and multicast or broadcast modes.

7. The method of claim 3, wherein the AN performance information is used for indicating a congestion status or communication performance of the AN, and/or the CN performance information is used for indicating a congestion status or communication performance of the CN; and
the determining a radio delivery mode for MBS service and/or radio resources for the MBS service according to the MBS assistance information, comprises:
determining a radio delivery mode for MBS service and/or radio resources for the MBS service or session according to the congestion status or communication performance of the AN and/or the congestion status or communication performance of the CN.

8. A method for determining a delivery mode, performed by core network, CN, function or an operation, administration and maintenance, OAM, platform, comprising:
determining multicast broadcast service, MBS, assistance information; and
sending the MBS assistance information to access network, AN, function for indicating the AN function to determine the radio delivery mode for MBS service and/or the radio resources for the MBS service according to the MBS assistance information.

9. The method of claim 8, wherein the determining MBS assistance information comprises:
determining, by the CN function or the OAM platform, the MBS assistance information based on one or more of the following parameters:
analytics information of network data;
MBS policy;
UE subscription data related to MBS services; or
information sent by the UE to the CN function through non-access stratum (NAS) signaling.

10. The method of claim 9, wherein the MBS policy is determined by a policy control function, PCF, based on MBS service parameters provided by an application function, AF, and is provided to the CN function.

11. The method of claim 8, wherein the determining MBS assistance information comprises:
subscribing to or requesting analytics information of a network from the network data analytics function, NWDAF, and receiving the analytics information sent by the NWDAF; and
determining the MBS assistance information according to the analytics information.

12. The method of claim 11, wherein the subscribing to or requesting analytics information of a network from the NWDAF, and receiving the analytics information sent by the NWDAF, comprises:
in case that the CN function is an application function, AF, subscribing to or requesting, by the AF, the analytics information from the NWDAF, and receiving the analytics information sent by the NWDAF, or subscribing to or requesting, by the AF, the analytics information from the NWDAF through a network exposure function, NEF, and receiving the analytics information sent by the NWDAF through the NEF; or
in case that the CN function is a policy control function, PCF, subscribing to or requesting, by the PCF, the analytics information from the NWDAF, and receiving the analytics information sent by the NWDAF; or
in case that the CN function is a SMF, subscribing to or requesting, by the SMF, the analytics information from the NWDAF, and receiving the analytics information sent by the NWDAF.

13. The method of claim 11, wherein the analytics information comprises one or more of the following types:
service experience;
network performance;
user data congestion;
quality of service, QoS, sustainability; or
network function (NF) load.

14. The method of claim 11, wherein the determining the MBS assistance information according to the analytics information, comprises:
in case that the CN function is an application function, AF, updating, by the AF, MBS service parameters according to the analytics information, and sending the updated MBS service parameters to a policy control function, PCF; or
in case that the CN function is a policy control function, PCF, updating, by the PCF, MBS policies according to the analytics information and/or the updated MBS service parameters, and sending the updated MBS policies to the SMF; or
in case that the CN equipment is a session management function, SMF, determining, by the SMF, the MBS assistance information based on one or more of the following parameters:
the analytics information;
the updated MBS policies;
UE subscription data related to MBS services, which is obtained by the SMF from the unified data management, UDM; or
information sent by the UE to the SMF through non-access stratum, NAS, signaling.

15. The method of any one of claims 8, 9, 11 or 14, wherein the MBS assistance information comprises one or more of the following information:
the first number of user equipments, UEs, used for indicating that the AN function is suggested to deliver the MBS service or session in a multicast or broadcast mode when the number of UEs that are receiving or expect to receive the MBS service or session under the AN function or a cell of the AN function reaches the first number of LTEs;
the second number of UEs, wherein the second number of UEs is the number of UEs counted or predicted by the CN or OAM that are receiving or expect to receive MBS service or session under the AN function or a cell of the AN function;
information of a delivery mode of specified service or application or session or quality of service, QoS, flow;
UE subscription data related to MBS services;
UE capability information for delivery mode;
AN performance information;
suggested information of the delivery mode used by AN under specified state or communication performance of the AN;
CN performance information, including CN performance statistics or predictions information;
suggested information or suggested policy for the delivery mode used by the AN under specified performance of CN.

16. An apparatus for determining a delivery mode, applied to an access network, AN, function, including:
a first receiving device, configured to receive multicast broadcast service, MBS, assistance information sent by core network, CN, function or an operation, administration and maintenance, OAM, platform; and
a first delivery mode determining device, configured to determine a radio delivery mode for MBS service and/or radio resources for the MBS service according to the MBS assistance information.

17. The apparatus of claim 16, wherein the MBS service comprises a first MBS session or a quality of service, QoS, flow that is being established or modified, and/or a second MBS session or QoS flow with data transmission in progress.

18. The apparatus of claim 16, wherein the MBS assistance information comprises one or more of the following information:
the first number of user equipments, UEs, used for indicating that the AN function is suggested to deliver the MBS service or session in a multicast or broadcast mode when the number of UEs that are receiving or expect to receive the MBS service or session under the AN function or a cell of the AN function reaches the first number of LTEs;
the second number of UEs, wherein the second number of UEs is the number of UEs counted or predicted by the CN or OAM that are receiving or expect to receive MBS service or session under the AN function or a cell of the AN function;
information of a delivery mode of specified service or application or session or quality of service, QoS, flow;
UE subscription data related to MBS services;
UE capability information for delivery mode;
AN performance information;
suggested information of the delivery mode used by AN under the specified state or communication performance of the AN;
CN performance information, including CN performance statistics or predictions information;
suggested information or suggested policy for the delivery mode used by the AN under the specified performance of CN.

19. The apparatus of claim 18, further comprising:
a UE number determining device, configured to determine the third number of UEs according to local measurements of the AN function or the second number of UEs, wherein the third number of UEs is the number of UEs that receive the MBS service or session under the AN function or a cell of the AN function; and
a second delivery mode determining device, configured to determine that the radio delivery mode for the MBS service or session is multicast or broadcast radio delivery mode, and/or the radio resources for the MBS service or session are multicast or broadcast radio resources when the third number of UEs reaches the fourth number of UEs, the fourth number of UEs being the first number of UEs or the minimum number of UEs that receives the MBS service or session in a multicast or broadcast mode determined by the AN function according to the local policy.

20. The apparatus of claim 18, further comprising:
a second receiving device, configured to receive a radio resource control, RRC, message sent by UE, wherein the RRC message includes a first identifier used for indicating MBS service that the UE expects to receive;
a third delivery mode determining device, configured to determine, for the UE, radio delivery mode for MBS service and/or radio resources for the MBS service when the UE subscription data related to MBS services includes the MBS service that the UE expects to receive.

21. The apparatus of claim 18, wherein the information of a delivery mode for the specified service or application or session or QoS flow includes that the specified service or application or session or QoS flow is allowed to be delivered in a multicast or broadcast mode only, or in a unicast mode only, or in both unicast and multicast or broadcast modes.

22. The apparatus of claim 18, wherein the AN performance information is used for indicating a congestion status or communication performance of the AN, and/or the CN performance information is used for indicating a congestion status or communication performance of the CN; and
the first delivery mode determining device is configured to determine a radio delivery mode for MBS service and/or radio resources for the MBS service or session according to the congestion status or communication performance of the AN and/or the congestion status or communication performance of the CN.

23. An apparatus for determining a delivery mode, applied to a core network, CN, function or an operation, administration and maintenance, OAM, platform, comprising:
an assistance information determining device, configured to determine multicast broadcast service, MBS, assistance information; and
a first sending device, configured to send the MBS assistance information to an access network, AN, function for indicating the AN function to determine the radio delivery mode for MBS service and/or the radio resources for the MBS service according to the MBS assistance information.

24. The apparatus of claim 23, wherein
the assistance information determining device is further configured to determine the MBS assistance information based on one or more of the following parameters:
analytics information of network data;
MBS policy;
UE subscription data related to MBS services; or
information sent by the UE to the CN function through non-access stratum, NAS, signaling.

25. The apparatus of claim 24, wherein the MBS policy is determined by a policy control function, PCF, based on MBS service parameters provided by an application function, AF, and is provided to the CN function.

26. The apparatus of claim 23, further comprising:
a second sending device, configured to subscribe to or request analytics information of a network from a network data analytic function, NWDAF; and
a receiving module, configured to receive the analytics information sent by the NWDAF,
wherein the assistance information determining device is further configured to determine the MBS assistance information according to the analytics information.

27. The apparatus of claim 26, wherein the analytics information includes one or more of the following types:
service experience;
network performance;
user data congestion;
quality of service, QoS, sustainability;
network function, NF, load.

28. The apparatus of claim 26, wherein in case that the CN function is an application function, AF, the apparatus further comprises:
a first updating device, configured to update MBS service parameters according to the analytics information;
a third sending device, configured to send the updated MBS service parameters to a policy control function, PCF; or
in case that the CN function is a policy control function, PCF, the apparatus further comprises:
a second updating device, configured to update MBS policies according to the analytics information and/or the updated MBS service parameters;
a fourth sending device, configured to send the updated MBS policy to a session management function, SMF; or
in case that the CN function is the SMF, the apparatus further comprises:
the assistance information determining device, configured to determine the MBS assistance information based on one or more of the following parameters:
the analytics information;
the updated MBS policies;
UE subscription data related to MBS services; or
information sent by the UE to the SMF through non-access stratum, NAS, signaling.

29. The apparatus of any one of claims 23, 24, 26 or 28, wherein the MBS assistance information includes one or more of the following information:
the first number of user equipments, UEs, used for indicating that the AN function is suggested to deliver the MBS service or session in a multicast or broadcast mode when the number of UEs that are receiving or expect to receive the MBS service or session under the AN function or a cell of the AN function reaches the first number of LTEs;
the second number of UEs, wherein the second number of UEs is the number of UEs counted or predicted by the CN or OAM that are receiving or expect to receive MBS service or session under the AN function or a cell of the AN function;
information of a delivery mode of the specified service or application or session or quality of service, QoS, flow;
UE subscription data related to MBS services;
UE capability information for delivery mode;
AN performance information;
suggested information of the delivery mode used by AN under the specified state or communication performance of the AN;
CN performance information, including CN performance statistics or predictions information; or
suggested information or suggested policy for the delivery mode used by the AN under the specified performance of CN.

30. An access network, AN, function, including a processor, and a memory storing a processor-executable program that, when executed by the processor, causes the processor to perform steps of the method for determining a delivery mode of any one of claims 1 to 7.

31. A core network, CN, function or an operation, administration and maintenance, OAM, platform, including a processor, and a memory storing a processor-executable program that, when executed by the processor, causes the processor to perform steps of the method for determining a delivery mode of any one of claims 8 to 15.

32. A non-transitory computer-readable storage medium storing computer programs, that, when executed by a processor, causes a processor to perform the steps of the method for determining a delivery mode of any one of claims 1 to 7.

33. A non-transitory computer-readable storage medium storing computer programs, that, when executed by a processor, causes a processor to perform the steps of the method for determining a delivery mode of any one of claims 8 to 15.
